# EUROPÄISCHE PATENTSCHRIFT

(11) **EP 2 795 783 B1**
(45) Veröffentlichungstag und Bekanntmachung des Hinweises auf die Patenterteilung: **26.02.2020**
(21) Anmeldenummer: 12784516.2
(22) Anmeldetag: 23.10.2012
(51) Int. Cl.: H02M 7/49, H02J 7/00, H02M 7/5395, H02M 7/483, B60L 58/18, B60L 58/21

(54) **SYSTEM UND VERFAHREN ZUM ANSTEUERN EINER ENERGIESPEICHEREINRICHTUNG**
SYSTEM AND METHOD FOR CONTROLLING AN ENERGY STORAGE DEVICE
SYSTÈME ET PROCÉDÉ DE COMMANDE D'UN DISPOSITIF DE STOCKAGE D'ÉNERGIE

(30) Priorität: 20.12.2011 DE 102011089309
(43) Veröffentlichungstag der Anmeldung: 29.10.2014
(73) Patentinhaber: Robert Bosch GmbH, 70442 Stuttgart (DE)
(72) Erfinder: WEISSENBORN, Erik, 70374 Stuttgart (DE); RAPP, Holger, 71254 Ditzingen (DE)
(86) Internationale Anmeldenummer: PCT/EP2012/070923
(87) Internationale Veröffentlichungsnummer: WO 2013/091938

(56) Entgegenhaltungen:
- DE-T2- 69 908 469
- DE-T2- 69 908 469
- US-A1- 2001 038 541
- YOUNG-MIN PARK ET AL: "A Simple and Reliable PWM Synchronization & Phase-Shift Method for Cascaded H-Bridge Multilevel Inverters based on a Standard Serial Communication Protocol", THE 2006 IEEE INDUSTRY APPLICATIONS CONFERENCE FORTY-FIRST IAS ANNUAL MEETING, CONFERENCE RECORD OF, IEEE, PISCATAWAY, NJ, US, 1. Oktober 2006 (2006-10-01), Seiten 988-994, XP031026148, ISBN: 978-1-4244-0364-6

## Beschreibung

Die Erfindung betrifft ein System und ein Verfahren zum Ansteuern einer Energiespeichereinrichtung, insbesondere in einer Batteriedirektumrichterschaltung zur Erzeugung einer n-phasigen Wechselspannung.

### Stand der Technik

Es zeichnet sich ab, dass in Zukunft sowohl bei stationären Anwendungen, wie z.B. Windkraftanlagen oder Solaranlagen, wie auch in Fahrzeugen, wie Hybrid- oder Elektrofahrzeugen, vermehrt elektronische Systeme zum Einsatz kommen, die neue Energiespeichertechnologien mit elektrischer Antriebstechnik kombinieren.

Die Einspeisung von mehrphasigem Strom in eine elektrische Maschine wird üblicherweise durch einen Umrichter in Form eines Pulswechselrichters bewerkstelligt. Dazu kann eine von einem Gleichspannungszwischenkreis bereitgestellte Gleichspannung in eine mehrphasige Wechselspannung, beispielsweise eine dreiphasige Wechselspannung umgerichtet werden. Der Gleichspannungszwischenkreis wird dabei von einem Strang aus seriell verschalteten Batteriemodulen gespeist. Um die für eine jeweilige Anwendung gegebenen Anforderungen an Leistung und Energie erfüllen zu können, werden häufig mehrere Batteriemodule in einer Traktionsbatterie in Serie geschaltet.

In der Druckschrift US 5,642,275 A1 ist ein Batteriesystem mit integrierter Wechselrichterfunktion beschrieben. Systeme dieser Art sind unter dem Namen Multilevel Cascaded Inverter oder auch Battery Direct Inverter (Batteriedirektumrichter, BDI) bekannt. Solche Systeme umfassen Gleichstromquellen in mehreren Energiespeichermodulsträngen, welche direkt an eine elektrische Maschine oder ein elektrisches Netz anschließbar sind. Dabei können einphasige oder mehrphasige Versorgungsspannungen generiert werden. Die Energiespeichermodulstränge weisen dabei eine Mehrzahl von in Serie geschalteten Energiespeichermodulen auf, wobei jedes Energiespeichermodul mindestens eine Batteriezelle und eine zugeordnete steuerbare Koppeleinheit aufweist, welche es erlaubt, in Abhängigkeit von Steuersignalen die jeweils zugeordnete mindestens eine Batteriezelle zu überbrücken oder die jeweils zugeordnete mindestens eine Batteriezelle in den jeweiligen Energiespeichermodulstrang zu schalten. Optional kann die Koppeleinheit derart gestaltet sein, dass sie es zusätzlich erlaubt, di jeweils zugeordnete mindestens eine Batteriezelle auch mit inverser Polarität in den jeweiligen Energiespeichermodulstrang zu schalten oder auch den jeweiligen Energiespeichermodulstrang zu unterbrechen. Durch geeignete Ansteuerung der Koppeleinheiten, z.B. mit Hilfe von Pulsweitenmodulation, können auch geeignete Phasensignale zur Steuerung der Phasenausgangsspannung bereitgestellt werden, so dass auf einen separaten Pulswechselrichter verzichtet werden kann. Der zur Steuerung der Phasenausgangsspannung erforderliche Pulswechselrichter ist damit sozusagen in den BDI integriert.

BDIs weisen üblicherweise einen höheren Wirkungsgrad und eine höhere Ausfallsicherheit gegenüber herkömmlichen Systemen auf. Die Ausfallsicherheit wird unter anderem dadurch gewährleistet, dass defekte, ausgefallene oder nicht voll leistungsfähige Batteriezellen durch geeignete Überbrückungsansteuerung der Koppeleinheiten aus den Energieversorgungssträngen herausgeschaltet werden können. Die Phasenausgangsspannung eines Energiespeichermodulstrangs kann durch entsprechendes Ansteuern der Koppeleinheiten variiert und insbesondere stufig eingestellt werden. Die Stufung der Ausgangsspannung ergibt sich dabei aus der Spannung eines einzelnen Energiespeichermoduls, wobei die maximal mögliche Phasenausgangsspannung die Summe der Spannungen aller Energiespeichermodule eines Energiespeichermodulstrangs bestimmt wird.

Zur Einstellung einer Ausgangsspannung eines Energiespeichermoduls kann eine pulsbreitenmodulierte (PWM) Ansteuerung der Koppeleinheiten erfolgen. Dadurch ist es möglich, durch gezielte Variation der Ein- bzw. Ausschaltzeiten einen gewünschten Mittelwert als Energiespeichermodulspannung auszugeben.

Aus der Druckschrift DE 39 24 398 A1 ist ein Verfahren zur PWM-Ansteuerung mehrerer in Reihe geschalteter Tiefsetzsteller bekannt, bei dem alle ausgangsseitig in Reihe geschalteten Tiefsetzsteller mit einem einheitlichen Aussteuergrad und einer einheitlichen PWM-Periodendauer betrieben werden. Die Ausgangsspannungsverläufe der einzelnen Tiefsetzsteller sind jeweils um einen Bruchteil einer Ansteuerperiode gegeneinander versetzt. Dadurch kann eine Gesamt-Ausgangsspannung erhalten werden, die eine geringere Schwankungsbreite um ihren Mittelwert herum aufweist.

Für BDIs besteht ein Bedarf nach PWM-Ansteuerverfahren, bei denen die Schwankung der Gesamt-Ausgangsspannung optimiert werden kann, insbesondere bei einer Erzeugung eines n-phasigen Ausgangsspannungssystems in einem n-phasigen BDI.

Aus der Druckschrift DE 699 08 469 T2 ist ein statischer Leistungsumsetzer bekannt, der eine oder mehrere Schaltungen umfasst, wovon jede mehrere Mehrfachebenen-Phasentreiber umfasst, wovon jeder wenigstens zwei Ebenen umfasst, wovon jede eine H-Brücke umfasst, wobei die Anordnung derart ist, dass im Gebrauch eine maximale Ausgangsspannung erhalten werden kann, die im Wesentlichen gleich der Summe aus den Spannungen der jeweiligen isolierten Gleichspannungsquelle ist.

### Offenbarung der Erfindung

Die vorliegende Erfindung schafft gemäß einem Aspekt ein Verfahren gemäß Anspruch 1.

Gemäß einem weiteren Aspekt schafft die vorliegende Erfindung ein System gemäß Anspruch 10.

### Vorteile der Erfindung

Es ist Idee der vorliegenden Erfindung, die Ansteuerstrategie einer Energiespeichereinrichtung mit mehreren Phasenanschlüssen zur Erzeugung einer mehrphasigen Versorgungsspannung aus einer Vielzahl von Energiespeichermodulen über ein PWM-Verfahren derart zu optimieren, dass stets nur diejenigen Spannungsraumzeiger im System der über ein PWM-Ansteuersignal angesteuerten Energiespeichermodule verwendet werden, welche sich dem Soll-Spannungsraumzeiger am nächsten befinden. Dazu werden PWM-Ansteuersignale für verschiedene Energieversorgungszweige so erzeugt, dass die für die Erzeugung herangezogenen Referenzsignale von Energieversorgungszweig zu Energieversorgungszweig verschiedene Phasenversätze zueinander aufweisen. Wenn der Phasenversatz einen Bruchteil des Phasenversatzes, den die Referenzsignale innerhalb eines Energieversorgungszweigs untereinander aufweisen, beträgt, erfolgt die Auswahl der Spannungsraumzeiger automatisch dergestalt, dass nur die dem Soll-Spannungsraumzeiger unmittelbar benachbarten Spannungsraumzeiger zur Erzeugung der Phasenspannungen herangezogen werden.

Ein erheblicher Vorteil dieser Vorgehensweise besteht darin, dass sich die Stromschwankungen in der Energiespeichereinrichtung und im angeschlossenen Verbraucher reduzieren lassen, was die Belastung der Schaltelemente der Energiespeichereinrichtung verringert. Umgekehrt kann die Schaltfrequenz der Koppeleinrichtungen der Energiespeichereinrichtung bei gleichbleibender Höhe der Stromschwankungen in der Energiespeichereinrichtung reduziert werden.

Gemäß dem erfindungsgemäßen Verfahren erfolgt weiterhin für jeden der Energieversorgungszweige ein Bestimmen, ob sich das pulsbreitenmodulierte Ansteuersignal des Energieversorgungszweigs zu Beginn einer Teilpulsperiode auf einem logisch hohen oder einem logisch niedrigen Potential befindet.

Vorteilhafterweise kann dann in einer weiteren Ausführungsform ein Auswählen derjenigen Energieversorgungszweige, für die sich das jeweilige pulsbreitenmodulierte Ansteuersignal des Energieversorgungszweigs zu Beginn einer Teilpulsperiode auf einem logisch niedrigen Potential befindet, als zweite Energieversorgungszweige erfolgen. Dadurch kann zu Beginn jeder Pulsperiode überprüft werden, welche Ansteuerstrategie für die Koppeleinrichtungen der Energiespeichermodule mit den geringsten Stromschwankungen verbunden ist.

Gemäß einer weiteren Ausführungsform des erfindungsgemäßen Verfahrens kann der Phasenversatz der zweiten Referenzsignale gegenüber den ersten Referenzsignalen positiv sein. Alternativ dazu kann gemäß einer weiteren Ausführungsform des erfindungsgemäßen Verfahrens der Phasenversatz der zweiten Referenzsignale gegenüber den ersten Referenzsignalen negativ sein. Dadurch kann die Abfolge der Schaltvorgänge vorteilhafterweise an die Ansteuerstrategie angepasst werden.

Gemäß einer weiteren Ausführungsform des erfindungsgemäßen Verfahrens können die ersten und zweiten Referenzsignale Dreiecksignale sein.

Gemäß einer weiteren Ausführungsform des erfindungsgemäßen Verfahrens können die ersten und zweiten Sollwertsignale zumindest über eine Pulsperiode hinweg konstanten Signalpegel aufweisen.

Gemäß einer Ausführungsform des erfindungsgemäßen Systems können die Koppeleinrichtungen Leistungs-MOSFET-Schalter oder IGBT-Schalter aufweisen.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: eine schematische Darstellung eines Systems mit einer Energiespeichereinrichtung gemäß einer Ausführungsform der vorliegenden Erfindung;
- Fig. 2: eine schematische Darstellung eines Energiespeichermoduls einer Energiespeichereinrichtung nach Fig. 1;
- Fig. 3: eine schematische Darstellung einer PWM-Ansteuerstrategie eines Energiespeichermoduls einer Energiespeichereinrichtung;
- Fig. 4: eine schematische Darstellung eines Potentialdiagramms der Ausgangsspannung eines Energiespeichermoduls einer Energiespeichereinrichtung, welches mit einer PWM-Ansteuerstrategie gemäß Fig. 4 betrieben wird;
- Fig. 5: eine schematische Darstellung einer PWM-Ansteuerstrategie einer Energiespeichereinrichtung mit einer Vielzahl von Energiespeichermodulen;
- Fig. 6: eine schematische Darstellung eines Potentialdiagramms der Ausgangsspannung einer Energiespeichereinrichtung mit einer Vielzahl von Energiespeichermodulen, welches mit einer PWM-Ansteuerstrategie gemäß Fig. 5 betrieben wird;
- Fig. 7: eine schematische Darstellung eines Pulswechselrichters;
- Fig. 8: eine schematische Darstellung einer PWM-Ansteuerstrategie einer Energiespeichereinrichtung mit einer Vielzahl von Energieversorgungszweigen;
- Fig. 9: eine schematische Darstellung eines Spannungsraumzeigerdiagramms einer Energiespeichereinrichtung mit einer Vielzahl von Energieversorgungszweigen, welche mit einer PWM-Ansteuerstrategie gemäß Fig. 8 betrieben wird;
- Fig. 10: eine schematische Darstellung einer Ansteuerstrategie einer Energiespeichereinrichtung mit einer Vielzahl von Energieversorgungszweigen, welche jeweils eine Vielzahl von Energiespeichermodulen aufweisen;
- Fig. 11: eine schematische Darstellung eines Potentialdiagramms der Ausgangsspannung einer Energiespeichereinrichtung mit einer Vielzahl von Energieversorgungszweigen, welche jeweils eine Vielzahl von Energiespeichermodulen aufweisen, wobei die Energiespeichereinrichtung mit einer PWM-Ansteuerstrategie gemäß Fig. 10 betrieben wird;
- Fig. 12: eine schematische Darstellung eines Spannungsraumzeigerdiagramms einer Energiespeichereinrichtung mit einer Vielzahl von Energieversorgungszweigen, welche jeweils eine Vielzahl von Energiespeichermodulen aufweisen, wobei die Energiespeichereinrichtung mit einer PWM-Ansteuerstrategie gemäß Fig. 10 betrieben wird; und
- Fig. 13: eine schematische Darstellung eines Verfahrens zum Ansteuern einer Energiespeichereinrichtung gemäß einer Ausführungsform der vorliegenden Erfindung.

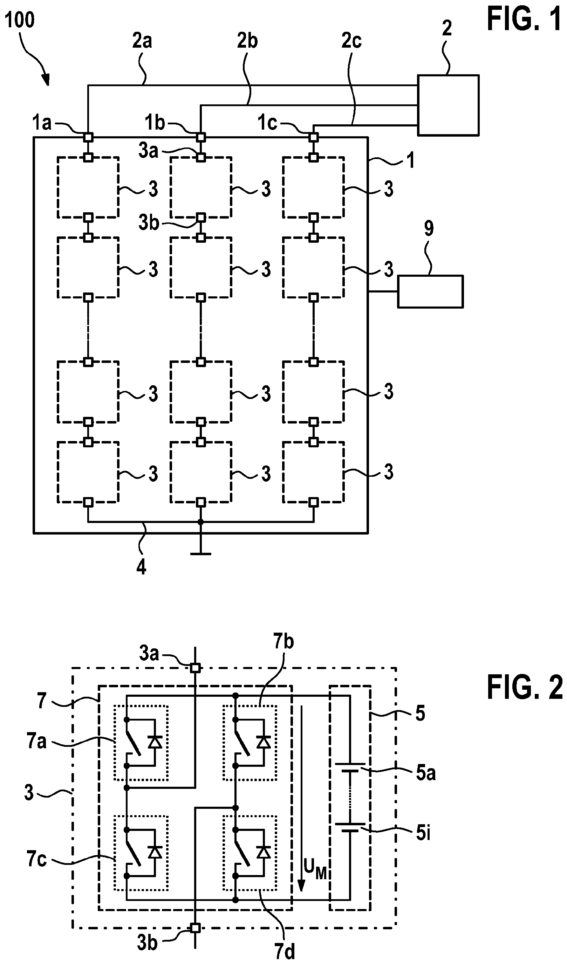

Fig. 1 zeigt ein System 100 zur Spannungswandlung von durch Energiespeichermodule 3 bereitgestellter Gleichspannung in eine n-phasige Wechselspannung. Das System 100 umfasst eine Energiespeichereinrichtung 1 mit Energiespeichermodulen 3, welche in Energieversorgungszweigen in Serie geschaltet sind. Beispielhaft sind in Fig. 1 drei Energieversorgungszweige gezeigt, welche zur Erzeugung einer dreiphasigen Wechselspannung, beispielsweise für eine Drehstrommaschine 2, geeignet sind. Es ist jedoch klar, dass jede andere Anzahl an Energieversorgungszweigen ebenso möglich sein kann. Die Energiespeichereinrichtung 1 verfügt an jedem Energieversorgungszweig über einen ersten Ausgangsanschluss 1a, 1b, 1c, welche jeweils an Phasenleitungen 2a, 2b bzw. 2c angeschlossen sind. Beispielhaft dient das System 100 in Fig. 1 zur Speisung einer dreiphasigen elektrischen Maschine 2. Es kann jedoch auch vorgesehen sein, dass die Energiespeichereinrichtung 1 zur Erzeugung von elektrischem Strom für ein Energieversorgungsnetz 2 verwendet wird.

Das System 100 kann weiterhin eine Steuereinrichtung 9 umfassen, welche mit der Energiespeichereinrichtung 1 verbunden ist, und mithilfe derer die Energiespeichereinrichtung 1 gesteuert werden kann, um die gewünschten Ausgangsspannungen an den jeweiligen ersten Ausgangsanschlüssen 1a, 1b, 1c bereitzustellen. Zudem kann die Steuereinrichtung 9 dazu ausgelegt sein, bei einem Laden der Energiespeicherzellen der Energiespeichereinrichtung 1 die jeweiligen aktiven Schaltelemente der Energiespeichereinrichtung 1 anzusteuern.

Die Energieversorgungszweige können mit jeweils einem Ende an einem gemeinsamen Sternpunkt 4 zusammengeführt sein. Das Potenzial dieses Sternpunkts 4 kann per Definition als das Potenzial 0 gewählt sein. Der Sternpunkt 4 kann auch mit dem Massepotenzial des Fahrzeugs elektrisch leitend verbunden sein.

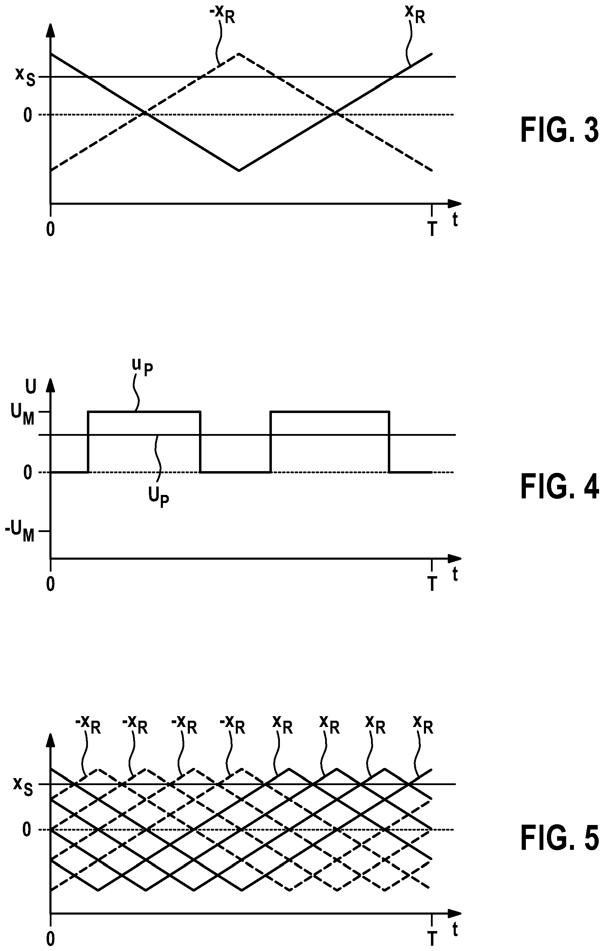

Jeder der Energieversorgungszweige weist mindestens zwei in Reihe geschaltete Energiespeichermodule 3 auf. Beispielhaft beträgt die Anzahl der Energiespeichermodule 3 pro Energieversorgungszweig in Fig. 1 vier, wobei jedoch jede andere Anzahl von Energiespeichermodulen 3 ebenso möglich ist. Vorzugsweise umfasst dabei jeder der Energieversorgungszweige die gleiche Anzahl an Energiespeichermodulen 3, wobei es jedoch auch möglich ist, für jeden Energieversorgungszweig eine unterschiedliche Anzahl an Energiespeichermodulen 3 vorzusehen. In den Fig. 5 bis 12 wird jeweils auf eine beispielhafte Anzahl von vier Energiespeichermodulen 3 eines Energieversorgungszweigs einer Energiespeichereinrichtung 1 Bezug genommen. Dabei gilt das dort Ausgeführte mutatis mutandis für jede andere Anzahl von Energiespeichermodulen 3 ebenso.

Die Energiespeichermodule 3 weisen jeweils zwei Ausgangsanschlüsse 3a und 3b auf, über welche eine Ausgangsspannung der Energiespeichermodule 3 bereitgestellt werden kann. Da die Energiespeichermodule 3 primär in Reihe geschaltet sind, summieren sich die Ausgangsspannungen der Energiespeichermodule 3 zu einer Gesamt-Ausgangsspannung, welche an dem jeweiligen der ersten Ausgangsanschlüsse 1a, 1b, 1c der Energiespeichereinrichtung 1 bereitgestellt werden kann.

Eine beispielhafte Aufbauform der Energiespeichermodule 3 ist in Fig. 2 in größerem Detail gezeigt. Die Energiespeichermodule 3 umfassen dabei jeweils eine Koppeleinrichtung 7 mit mehreren Koppelelementen 7a, 7c sowie 7b und 7d. Die Energiespeichermodule 3 umfassen weiterhin jeweils ein Energiespeicherzellenmodul 5 mit einem oder mehreren in Reihe geschalteten Energiespeicherzellen 5.1 bis 5.i, wobei i die Anzahl der in Reihe geschalteten Energiespeicherzellen ist.

Das Energiespeicherzellenmodul 5 kann dabei beispielsweise in Reihe geschaltete Zellen 5a bis 5i, beispielsweise Lithium-Ionen-Zellen aufweisen. Dabei beträgt die Anzahl der Energiespeicherzellen 5a bis 5i in den in Fig. 2 gezeigten Energiespeichermodulen 3 beispielhaft zwei, wobei jedoch jede andere Zahl von Energiespeicherzellen 5a bis 5i ebenso möglich ist.

Die Energiespeicherzellenmodule 5 weisen eine Klemmenspannung von U_{M} auf und sind über Verbindungsleitungen mit Eingangsanschlüssen der zugehörigen Koppeleinrichtung 7 verbunden. An den Eingangsklemmen der zugehörigen Koppeleinrichtung 7 liegt also die Spannung U_{M} an. Dabei bilden die in Reihe geschalteten Koppelelemente 7a und 7c, deren Mittelabgriff mit der Ausgangsklemmen 3a verbunden ist, den so genannten linken Zweig der Vollbrücke und es bilden die in Reihe geschalteten Koppelelemente 7b und 7d, deren Mittelabgriff mit der Ausgangsklemme 3b verbunden ist, den so genannten rechten Zweig der Vollbrücke. Die Koppeleinrichtung 7 ist in Fig. 2 als Vollbrückenschaltung mit je zwei Koppelelementen 7a, 7c und zwei Koppelelementen 7b, 7d ausgebildet. Die Koppelelemente 7a, 7b, 7c, 7d können dabei jeweils ein aktives Schaltelement, beispielsweise einen Halbleiterschalter, und eine dazu parallel geschaltete Freilaufdiode aufweisen. Es kann dabei vorgesehen sein, dass die Koppelelemente 7a, 7b, 7c, 7d als MOSFET-Schalter ausgebildet sind, welche bereits eine intrinsische Diode aufweisen.

Die Koppelelemente 7a, 7b, 7c, 7d können derart angesteuert werden, beispielsweise mit Hilfe der in Fig. 1 dargestellten Steuereinrichtung 9, dass das jeweilige Energiespeicherzellenmodul 5 selektiv zwischen die Ausgangsanschlüsse 3a und 3b geschaltet wird oder dass das Energiespeicherzellenmodul 5 überbrückt wird. Mit Bezug auf Fig. 2 kann das Energiespeicherzellenmodul 5 beispielsweise in Vorwärtsrichtung zwischen die Ausgangsanschlüsse 3a und 3b geschaltet werden, indem das aktive Schaltelement des Koppelelements 7d und das aktive Schaltelement des Koppelelements 7a in einen geschlossenen Zustand versetzt werden, während die beiden übrigen aktiven Schaltelemente der Koppelelemente 7b und 7c in einen offenen Zustand versetzt werden. In diesem Fall liegt zwischen den Ausgangsklemmen 3a und 3b der Koppeleinrichtung 7 die Spannung U_{M} an. Ein Überbrückungszustand kann beispielsweise dadurch eingestellt werden, dass die beiden aktiven Schaltelemente der Koppelelemente 7a und 7b in geschlossenen Zustand versetzt werden, während die beiden aktiven Schaltelemente der Koppelelemente 7c und 7d in offenem Zustand gehalten werden. Ein zweiter Überbrückungszustand kann beispielsweise dadurch eingestellt werden, dass die beiden aktiven Schalter der Koppelelemente 7c und 7d in geschlossenen Zustand versetzt werden, während die aktiven Schaltelemente der Koppelelemente 7a und 7b in offenem Zustand gehalten werden. In beiden Überbrückungszuständen liegt zwischen den beiden Ausgangsklemmen 3a und 3b der Koppeleinrichtung 7 die Spannung 0 an. Ebenso kann das Energiespeicherzellenmodul 5 in Rückwärtsrichtung zwischen die Ausgangsanschlüsse 3a und 3b der Koppeleinrichtung 7 geschaltet werden, in dem die aktiven Schaltelemente der Koppelelemente 7b und 7c in geschlossenen Zustand versetzt werden, während die aktiven Schaltelemente der Koppelelemente 7a und 7d in offenen Zustand versetzt werden. In diesem Fall liegt zwischen den beiden Ausgangsklemmen 3a und 3b der Koppeleinrichtung 7 die Spannung -U_{M} an.

Durch geeignetes Ansteuern der Koppeleinrichtungen 7 können daher einzelne Energiespeicherzellenmodule 5 der Energiespeichermodule 3 gezielt in die Reihenschaltung eines Energieversorgungszweigs integriert werden. Dadurch kann durch eine gezielte Ansteuerung der Koppeleinrichtungen 7 zum selektiven Schalten der Energiespeicherzellenmodule 5 der Energiespeichermodule 3 in die Energieversorgungszweige eine Gesamt-Ausgangsspannung an jedem der Ausgangsanschlüsse 1a, 1b, 1c bereitgestellt werden, die von den einzelnen Ausgangsspannungen der Energiespeicherzellenmodule 5 der Energiespeichermodule 3 abhängig ist. Die Gesamt-Ausgangsspannung kann dabei jeweils in Stufen eingestellt werden, wobei die Anzahl der Stufen mit der Anzahl der Energiespeichermodule 3 pro Energieversorgungszweig skaliert. Bei einer Anzahl von k Energiespeichermodulen 3 in einem Energieversorgungszweig kann die Gesamt-Ausgangsspannung der Energieversorgungszweigs in 2k+1 Stufen zwischen - *k·U_{M},...*,0*,...,*+*k*·*U_{M}* eingestellt werden.

Über eine pulsbreitenmodulierte (PWM)-Ansteuerung kann an jedem der Ausgangsanschlüsse 1a, 1b, 1c eine Folge von Ausgangsspannungen eingestellt werden, deren Spannungsverlauf sich dem einer sinusförmigen Wechselspannung annähert. Dazu kann den Koppelelementen 7a, 7c bzw. 7b, 7d jeder Halbbrücke der Energiespeichermodule 3 über geeignete Variation der Pulsbreiten eines PWM-Ansteuersignals ein gewünschter Ablauf von Schaltvorgängen vorgegeben werden. Eine Möglichkeit, ein PWM-Ansteuersignal für eines der Energiespeichermodule 3 zu erzeugen, ist schematisch in Fig. 3 illustriert.

Ein Sollwertsignal x_{S} wird dazu mit einem Referenzsignal x_{R} verglichen. Das Referenzsignal x_{R} kann dabei ein Dreiecksignal sein, welches zwischen normierten Werten von -1 und +1 verläuft. Das Sollwertsignal x_{S} kann dabei ebenfalls einen normierten Wert zwischen -1 und +1 aufweisen. Gezeigt ist eine Pulsperiode der Dauer T, während der die Pulsbreite eines PWM-Ansteuersignals für den linken Zweig der Vollbrücke und damit die Schaltzeitpunkte der aktiven Schaltelemente des linken Zweigs der Vollbrücke über einen Vergleich zwischen dem Sollwertsignal x_{S} und dem Referenzsignal x_{R} bestimmt werden. Wenn das Sollwertsignal x_{S} einen größeren Wert aufweist als das Referenzsignal x_{R}, wird das PWM-Ansteuersignal für den linken Zweig der Vollbrücke auf einen logisch hohen Pegel gesetzt. Dies hat zur Folge, dass das Koppelelement 7a in einen elektrisch leitenden Zustand versetzt wird, während das Koppelelement 7c in einen elektrisch sperrenden Zustand versetzt wird. Wenn das Sollwertsignal x_{S} einen kleineren Wert aufweist als das Referenzsignal x_{R}, wird das PWM-Ansteuersignal für den linken Zweig auf einen logisch niedrigen Pegel gesetzt. Dies hat zur Folge, dass das Koppelelement 7a in einen elektrisch sperrenden Zustand versetzt wird, während das Koppelelement 7c in einen elektrisch leitenden Zustand versetzt wird. Je höher der Pegel des Sollwertsignals x_{S} dabei ist, desto länger ist die Pulsbreite des PWM-Ansteuersignals für den linken Zweig während einer Pulsperiode T. Das Referenzsignal x_{R} wiederholt sich nach einer Pulsperiode T.

In entsprechender Weise werden die Pulsbreite eines PWM-Ansteuersignals für den rechten Zweig der Vollbrücke und damit die Schaltzeitpunkte der aktiven Schaltelemente des rechten Zweigs der Vollbrücke über einen Vergleich zwischen dem Sollwertsignal x_{S} und dem Referenzsignal -x_{R} bestimmt. Wenn das Sollwertsignal x_{S} einen größeren Wert aufweist als das Referenzsignal -x_{R}, wird das PWM-Ansteuersignal für den rechten Zweig der Vollbrücke auf einen logisch niedrigen Pegel gesetzt. Dies hat zur Folge, dass das Koppelelement 7d in einen elektrisch leitenden Zustand versetzt wird, während das Koppelelement 7b in einen elektrisch sperrenden Zustand versetzt wird. Wenn das Sollwertsignal x_{S} einen kleineren Wert aufweist als das Referenzsignal -x_{R}, wird das PWM-Ansteuersignal für den rechten Zweig auf einen logisch hohen Pegel gesetzt. Dies hat zur Folge, dass das Koppelelement 7d in einen elektrisch sperrenden Zustand versetzt wird, während das Koppelelement 7b in einen elektrisch leitenden Zustand versetzt wird. Je höher der Pegel des Sollwertsignals x_{S} dabei ist, desto kürzer ist die Pulsbreite des PWM-Ansteuersignals für den rechten Zweig während einer Pulsperiode T.

Ist das Sollwertsignal x_{S} während einer Pulsperiode konstant oder ist zumindest dessen zeitlicher Verlauf bekannt, so können die Schaltzeitpunkte für die aktiven Schaltelemente der Koppelelemente 7a bis 7d der Koppeleinrichtung 7 auch ohne ständige Berechnung der Momentanwerte der Referenzsignale x_{R} und -x_{R} direkt aus dem Sollwertsignal x_{S} bestimmt werden, indem nur die Zeitpunkte, zu denen bei Anwendung des oben beschriebenen Verfahrens x_{S} gleich x_{R} und zu denen x_{S} gleich -x_{R} ist, relativ zum Beginn der Pulsperiode T der Koppeleinrichtung 7 direkt berechnet werden. Diese Zeitpunkte sind die Schaltzeitpunkte für die Koppelelemente 7a bis 7d. Zu dem in Fig. 3 dargestellten Beispiel sei beispielsweise im Folgenden ein konstanter Wert von x_{S} gleich +2/3 angenommen. In diesem Fall liegt zu Beginn der Pulsperiode T zunächst der Schaltzustand vor, dass die Koppelelemente 7b und 7d elektrisch leitend sind, während die Koppelelemente 7a und 7c sperren. Zum Zeitpunkt T/12 ist dann x_{S} gleich x_{R}, wobei x_{R} in dieser ersten Hälfte der Pulsperiode T kontinuierlich abnimmt. Folglich muss zu diesem Zeitpunkt das Ansteuersignal für den linken Zweig der Vollbrücke vom logisch niedrigen auf den logisch hohen Pegel umgeschaltet werden. Dies bedeutet, dass zu diesem Zeitpunkt das Koppelelement 7b gesperrt wird und das Koppelelement 7a in den elektrisch leitenden Zustand versetzt wird. In entsprechender Weise ergibt sich, dass zum Zeitpunkt 5T/12 das Koppelelement 7d gesperrt wird und das Koppelelement 7c in den leitenden Zustand versetzt wird. Zum Zeitpunkt 7T/12 wird dann das Koppelelement 7c wieder gesperrt und das Koppelelement 7d wird wieder in den leitenden Zustand versetzt. Schließlich wird zum Zeitpunkt 11T/12 das Koppelelement 7a wieder gesperrt und das Koppelelement 7b wieder in den leitenden Zustand versetzt. All diese Schaltzeitpunkte und die zu diesen Schaltzeitpunkten auszuführenden Schaltvorgänge können aus dem Wert des Sollwertsignals x_{S} auf einfache Weise berechnet werden, ohne dass die Referenzsignale x_{R} und -x_{R} explizit berechnet werden.

Wie in Fig. 4 schematisch dargestellt, wird auf diese Weise erreicht, dass die Ausgangsspannung einen Verlauf u_{P} aufweist, welcher zwischen einem logisch hohen Spannungswert und einem logisch niedrigen Spannungswert schwankt, wobei der logisch niedrige Spannungswert um U_{M} kleiner ist als der logisch hohe Spannungswert. Ist xₛ positiv, so ist der logisch hohe Spannungswert gleich +U_{M}, ist xₛ negativ, so ist der logisch hohe Spannungswert gleich 0. Die Ausgangsspannung u_{P} wechselt dabei im Verlauf einer Pulsperiode T zwei Mal zwischen dem logisch hohen und dem logisch niedrigen Spannungswert hin und her. Somit ist die Periodendauer der Ausgangsspannung u_{P} gleich T/2 und damit gegenüber er Periodendauer T der Referenzsignale x_{R} und -x_{R} bereits halbiert. Im Mittel ergibt sich dabei eine Ausgangsgleichspannung U_{P} als Ausgangsspannung des jeweiligen Energiespeichermoduls 3, wobei der Wert U_{P} mit dem Wert des Sollwertsignals x_{S} skaliert.

Diese Ansteuerstrategie lässt sich - wie in Fig. 5 beispielhaft dargestellt - auf eine Vielzahl von Energiespeichermodulen 3 pro Energieversorgungszweig erweitern. Dazu wird ein Sollwertsignal x_{S} für den Energieversorgungszweig festegelegt, welcher mit der Soll-Ausgangsspannung des Energieversorgungszweigs skaliert. Für jedes einzelne der Energiespeichermodule 3 wird ein eigenes Referenzsignal x_{R} erzeugt, die jeweils einen Phasenversatz zu den benachbarten Referenzsignalen x_{R} des jeweiligen Energieversorgungszweigs aufweisen. In Fig. 5 ist beispielhaft der Fall für k = 4 Energiespeichermodule 3 pro Energieversorgungszweig gezeigt, wobei sich die Ansteuerstrategie auch auf andere Werte für k verallgemeinern lässt. Die Referenzsignale x_{R} der k Energiespeichermodule 3 sind dabei jeweils um T/2k gegeneinander verschoben.

Dadurch entsteht ein System von 2k Referenzsignalen x_{R1} bis x_{Rk} und -x_{R1} bis -x_{Rk}. Die Zuordnung der jeweiligen Referenzsignalpaare x_{R} und -x_{R} zu den k Energiespeichermodulen 3 kann dabei beliebig permutiert sein.

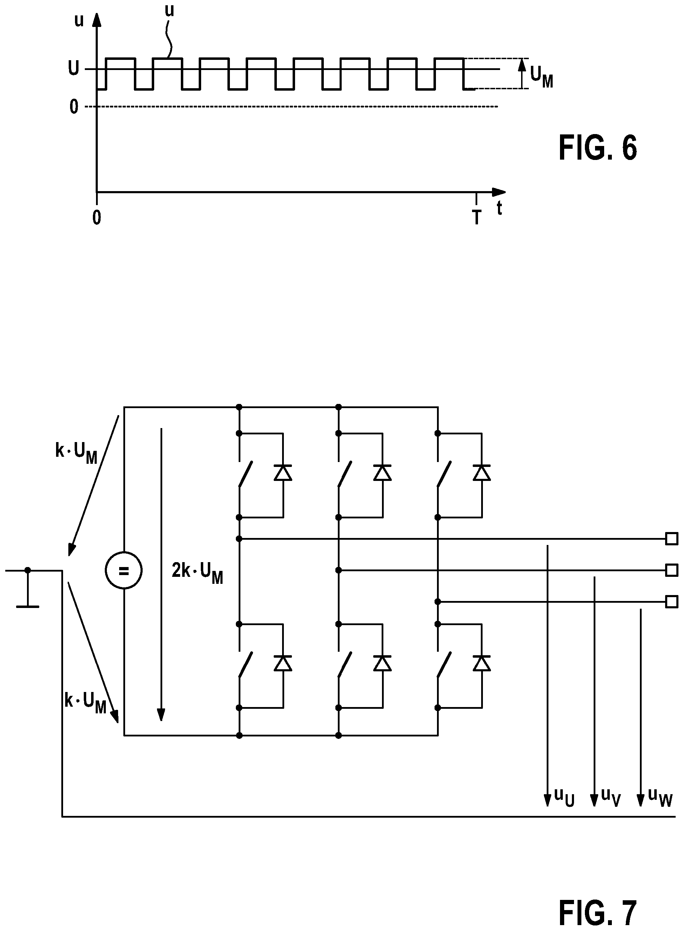

Erzeugt man nun für die jeweiligen Energiespeichermodule 3 eines Energieversorgungszweigs pulsbreitenmodulierte Ansteuersignale über einen Vergleich des Sollwertsignals x_{S} mit den jeweils zugehörigen Referenzsignalen x_{R} und -x_{R}, so ergibt sich eine Staffelung an Einzel-Ansteuersignalen, die einen Spannungsverlauf u am Ausgang des Energieversorgungszweigs erzeugen, welcher in Fig. 6 schematisch dargestellt ist. Das System von Referenzsignalen x_{R} bedingt damit eine Ausgangsspannung am Ausgang des Energieversorgungszweigs, deren Schwankungsbreite gleich der Ausgangsspannung U_{M} eines Energiespeicherzellenmoduls 5 ist. Dabei schwankt die Ausgangsspannung zwischen einem höheren und einem um U_{M} geringeren, niedrigen Spannungswert, wobei diese Spannungswerte beide ganzzahlige Vielfache von U_{M} sind und sich die mittlere Ausgangsspannung U zu *x_{S}* · *k · U_{M}* ergibt. Durch die Staffelung der Referenzsignale x_{R} ergibt sich für die Periodendauer des Wechselanteils des Ausgangsspannungsverlaufs eine Periodendauer von T/2k. Würde die Ausgangsspannung des Energieversorgungszweigs stattdessen durch einen Zweig eines herkömmlichen Pulswechselrichters erzeugt, so müsste - bei gleichem Ausgangsspannungsstellbereich - dieser Zweig mit einer Eingangsspannung von *2k* · *U_{M}* versorgt werden. Die Schwankungsbreite von dessen Ausgangsspannung während einer Pulsperiode der Dauer T beträgt dann 2*k* · *U_{M}*, die Periodendauer des Wechselanteils dieser Ausgangsspannung ergibt sich zu T.

Fig. 7 zeigt eine schematische Darstellung eines herkömmlichen Pulswechselrichters mit der Eingangsspannung 2*k* · *U_{M},* wobei die negative Eingangsklemme gegenüber einem Potenzial 0 das Potenzial -kU_{M} und die positive Eingangsklemme das Potenzial +kU_{M} aufweist.

Die Stromschwankungen des oben beschriebenen Batteriedirektumrichters in Verbindung mit dem beschriebenen PWM-Verfahren reduzieren sich also gegenüber einem mit gleicher PWM-Periodendauer T betriebenen, herkömmlichen Pulswechselrichter mit gleichem Ausgangsstellbereich um einen Faktor von 1/2k*1/2k = (1/2k)², so dass sich die Schaltfrequenz gegenüber einer herkömmlichen Ansteuerstrategie senken lässt, ohne dass die Stromschwankungen vorgegebene Schwellwerte überschreiten.

Wie schon bei der Beschreibung des PWM-Verfahrens für eine Koppeleinrichtung 7 erläutert, lassen sich auch hier die jeweils während der nächsten Teilpulsperiode der Dauer T/2k auszuführenden Schaltvorgänge nach Art und Zeitpunkt bestimmen, ohne dass dazu die zeitlichen Verläufe der Referenzsignale x_{R} permanent mit berechnet werden müssen. Hierzu muss lediglich der zeitliche Verlauf des Sollwertsignals x_{S} während der nächsten Teilpulsperiode der Dauer T/2k bekannt sein. Vorzugsweise ist dieser zeitliche Verlauf während einer Teilpulsperiode der Dauer T/2k konstant. Bei einer Änderung des Sollwertsignals x_{S} zu Beginn einer neuen Teilpulsperiode der Dauer T/2k können zu diesem Zeitpunkt zusätzliche Schaltvorgänge ausgelöst werden. Auch die Art dieser Schaltvorgänge lässt sich ohne explizite ständige Berechnung der Referenzsignale x_{R} bestimmen, wenn der Wert des Sollwertsignals x_{S} in der vorhergehenden und in der neu beginnenden Teilpulsperiode jeweils bekannt ist.

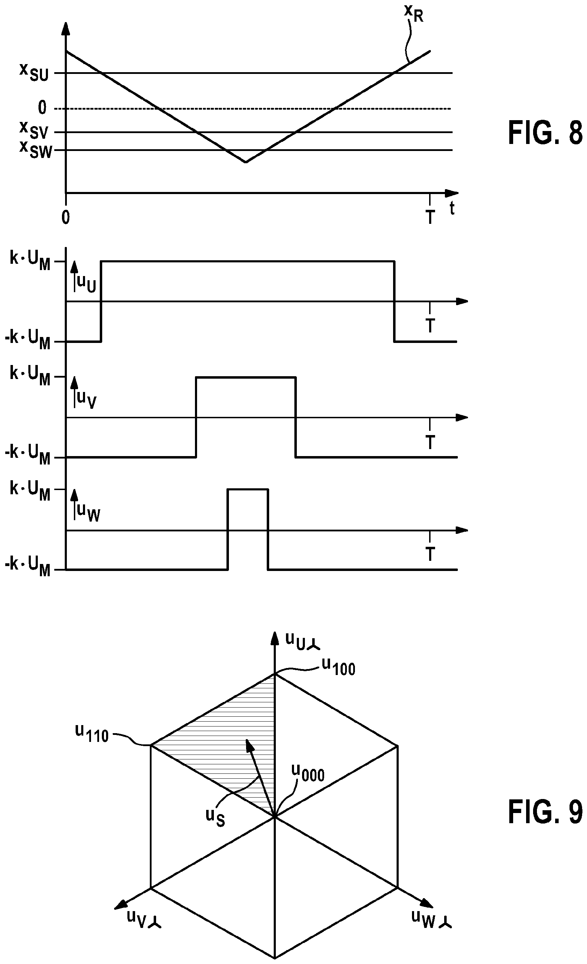

Fig. 8 zeigt eine schematische Darstellung einer Ansteuerstrategie für drei verschiedene Energieversorgungszweige eines mit der Eingangsspannung 2*k* · *U_{M}* versorgten Pulswechselrichters gemäß Fig. 7. Dabei ist die Anzahl von drei beispielhafter Natur, und es ist ebenso möglich, eine andere Anzahl von Energieversorgungszweigen mit der in Fig. 8 gezeigten Ansteuerstrategie anzusteuern. Um ein n-phasiges Versorgungsspannungssystem an den Ausgängen von n Energieversorgungszweigen zu erhalten, kann jeder der Energieversorgungszweige mit einem unterschiedlichen Sollwertsignal betrieben werden. Beispielsweise kann ein erster Energieversorgungszweig mit einem Sollwertsignal x_{SU} betrieben werden, ein zweiter Energieversorgungszweig mit einem Sollwertsignal x_{SV}, und ein dritter Energieversorgungszweig mit einem Sollwertsignal x_{SW} betrieben. Da jeder Energieversorgungszweig aus einer Halbbrücke mit einem Mittelabgriff besteht, entfällt der Vergleich des jeweiligen Sollwertsignals x_{S} mit dem Referenzsignal -x_{R}. Dadurch ergibt sich ein System an Ausgangsspannungen u_{U}, u_{V} und u_{W}, deren zeitliche Verläufe während einer Pulsperiode der Dauer T ebenfalls in Fig. 8 dargestellt sind. Die dabei auftretenden Kombinationen von Ausgangsspannungswerten u_{U}, u_{V} und u_{W} werden durch das Raumzeigerdiagramm in Fig. 9 illustriert. Die Ausgangsspannungen u_{U}, u_{V} und u_{W} realisieren dabei ein Sternspannungssystem, welches beispielsweise zur Energieversorgung einer dreiphasigen elektrischen Maschine 2 an Statorklemmen der elektrischen Maschine 2 angelegt werden kann. An diesen Statorklemmen stellen sich Spannungsraumzeiger ein, welche in Fig. 9 schematisch dargestellt sind.

Das Spannungszeigerdiagramm in Fig. 9 zeigt verschiedene Spannungswerte u_{xyz} für Energieversorgungszweige mit jeweils einem Energiespeichermodul 3, wobei die Indizes x, y und z den Wert 0 oder 1 annehmen können, je nachdem, ob der jeweilige Energieversorgungszweig gerade mit einem PWM-Ansteuersignal mit logisch hohem Pegel oder mit einem PWM-Ansteuersignal mit logisch niedrigem Pegel angesteuert wird. Beispielsweise ist der Spannungsraumzeiger u₁₀₀ ein Zustand, bei dem einer der Energieversorgungszweige gerade die Ausgangsspannung u_{U}=+kU_{M} ausgibt, während die anderen beiden Energieversorgungszweige die Ausgangsspannung -kU_{M} ausgeben. Um dem Sollwertspannungsraumzeiger u_{S} folgen zu können, ist es vorteilhaft, jeweils Spannungsraumzeiger zu verwenden, die dem Sollwertspannungsraumzeiger u_{S} unmittelbar benachbart liegen. In dem in Fig. 9 gezeigten Beispiel liegt der Sollwertspannungsraumzeiger u_{S} in dem durch die Spannungsraumzeiger u₁₀₀, u₁₁₀ und u₀₀₀ aufgespannten Bereich, welcher durch die schraffierte Fläche markiert ist. Wenn nur diese Spannungsraumzeiger u₁₀₀, u₁₁₀ und u₀₀₀ zur Erzeugung des Sollwertspannungsraumzeigers u_{S} herangezogen werden, ist die Strom- bzw. Spannungsschwankungsbreite der Ausgangsspannungen der Energieversorgungszweige minimal.

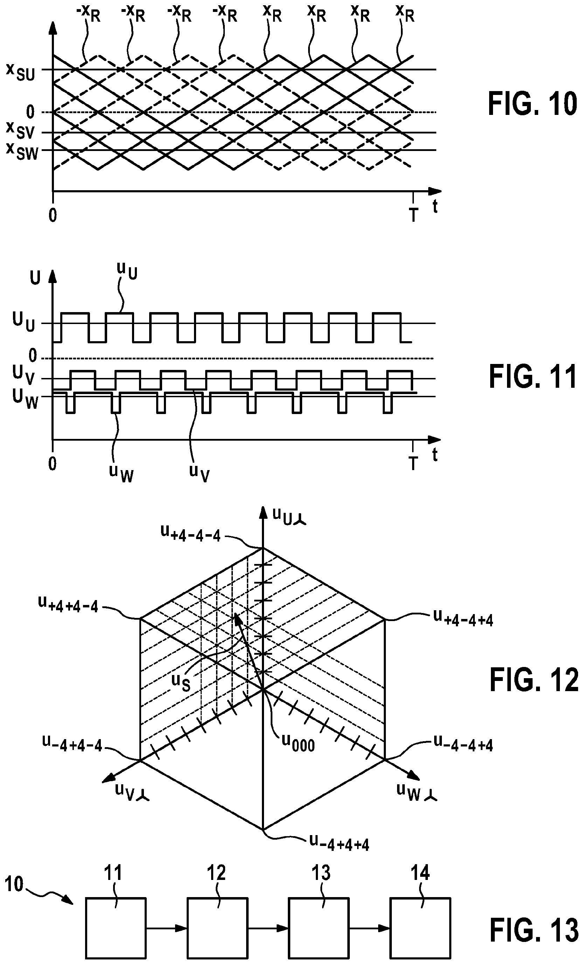

Fig. 10 zeigt eine schematische Darstellung einer für einen Batteriedirektumrichter mit drei Energieversorgungszweigen mit jeweils k = 4 Energiespeichermodulen erweiterten Ansteuerstrategie. Wieder werden drei Sollwertsignale x_{SU}, x_{SV} und x_{SW} für die verschiedenen Energieversorgungszweige verwendet, welche mit einem phasenversetzt gestaffelten System an Referenzsignalen x_{R} pro Energiespeichermodul verglichen werden, um die PWM-Ansteuersignale zu erzeugen. Die Spannungsverläufe an den Ausgängen der Energieversorgungszweige sind schematisch in Fig. 11 illustriert. An einem ersten Energieversorgungszweig ergibt sich ein Spannungsverlauf u_{U}, an einem zweiten Energieversorgungszweig ein Spannungsverlauf u_{V}, und an einem dritten Energieversorgungszweig ergibt sich ein Spannungsverlauf u_{W}.

Fig. 12 zeigt das auf einen Batteriedirektumrichter mit drei Energieversorgungszweigen mit jeweils k = 4 Energiespeichermodulen 3 erweiterte Spannungszeigerdiagramm aus Fig. 9. Dabei sind verschiedene Spannungswerte u_{xyz} für Energieversorgungszweige mit jeweils k = 4 Energiespeichermodulen 3 bezeichnet, wobei die Indizes x, y und z einen ganzzahligen Wert zwischen -4 und +4 annehmen können, je nachdem, wie viele der jeweiligen Energiespeichermodule 3 des jeweiligen Energieversorgungszweigs mit positiver oder negativer Einzelmodulspannung gerade zur Ausgangsspannung beitragen. Beispielsweise ist der Spannungsraumzeiger u₊₄₋₂₋₂ ein Zustand, bei dem einer der Energieversorgungszweige gerade die Ausgangsspannung u_{U} = 4U_{M} unter Einbeziehung aller k = 4 Energiespeichermodule 3 ausgibt, während die anderen beiden Energieversorgungszweige jeweils die Ausgangsspannungen u_{V} = -2U_{M} und u_{W} = -2U_{M} unter Einbeziehung von jeweils zwei Energiespeichermodulen 3 ausgeben.

Wiederum ist es wünschenswert, den Sollwertspannungsraumzeiger u_{S} mit denjenigen Spannungsraumzeigern darzustellen, welche dem Sollwertspannungsraumzeiger u_{S} am nächsten liegen. Verwendet man nun für die Referenzsignale x_{R} in Fig. 10 für jeden der Energieversorgungszweige den gleichen Satz an Referenzsignalen x_{R}, das heißt, Referenzsignale x_{R}, welche im Bezug auf die anderen Energieversorgungszweige die gleichen Phasenversätze aufweisen, so kann es vorkommen, dass für bestimmte Sollwertspannungsraumzeiger u_{S} Spannungsraumzeiger genutzt werden, welche dem Sollwertspannungsraumzeiger u_{S} nicht am nächsten liegen. Beispielsweise werden zur Darstellung eines Sollwertspannungsraumzeiger u_{S}, welcher in dem Dreiecksbereich zwischen den Spannungsraumzeigern u₊₃₋₁₊₂, u₊₂₋ᵢ₊₂ und u₊₂₋₁₋₃ liegt, statt des Spannungsraumzeigers u₊₂₋₁₊₂ die Spannungsraumzeiger u₊₃₋₁₊₃ und u₊₂₀₋₂ genutzt, welche deutlich weiter von dem Sollwertspannungsraumzeiger u_{S} entfernt liegen als der eigentlich bevorzugte Spannungsraumzeiger u₊₂₋₁₊₂. Dadurch steigen auch die Spannungsschwankungen in den Ausgangsspannungen der Energieversorgungszweige.

Die Ursache dieses Problems liegt darin begründet, dass für einen dreiphasigen BDI, wie in Fig. 1 schematisch dargestellt, in bestimmten Zeitspannen während einer Teil-Pulsperiode T/2k die Ausgangsspannungen der drei Energieversorgungszweige zwischen zwei verschiedenen Werten hin- und hergeschaltet werden. Abhängig von jeweiligen Sollwertsignal kann es dann vorkommen, dass zu Beginn der Teil-Pulsperiode T/2k zunächst die höhere der beiden genutzten Ausgangsspannungen vorliegt, welches im Verlauf der ersten Hälfte der Teil-Pulsperiodendauer auf die niedrigere der Ausgangsspannungen abgesenkt wird, um dann im Verlauf der zweiten Hälfte der Teil-Pulsperiode T/2k wieder auf die höhere der beiden genutzten Ausgangsspannungen angehoben zu werden. Gleichermaßen kann in bestimmten anderen Teil-Pulsperioden der genau umgekehrte Fall auftreten, dass von der niedrigeren der Ausgangsspannungen auf die höhere und wieder zurück umgeschaltet wird. Je nach Kombination der Sollwertsignale x_{SU}, x_{SV} und x_{SW} für die verschiedenen Energieversorgungszweige kann es vorkommen, dass bei in einigen Energieversorgungszweigen in der ersten Hälfte einer Teil-Pulsperiode ein Umschalten von einer niedrigeren zu einer höheren Ausgangsspannung stattfindet, während in den jeweils anderen der umgekehrte Schaltvorgang von einer höheren zu einer niedrigeren Ausgangsspannung stattfindet.

Im System der Referenzsignale x_{R} lässt sich feststellen, dass der erste Schaltvorgang einer Pulsperiode immer dann von hoher zu niedriger Ausgangsspannung erfolgt, wenn das erste der Referenzsignale, welches das Sollwertsignal x_{S} schneidet, ansteigt, das heißt, einen positiven Gradienten aufweist. Umgekehrt erfolgt der erste Schaltvorgang einer Pulsperiode immer dann von niedriger zu hoher Ausgangsspannung, wenn das erste der Referenzsignale, welches das Sollwertsignal x_{S} schneidet, fällt, das heißt, einen negativen Gradienten aufweist. Wenn also zu Beginn jeder Pulsperiode für jeden der Energieversorgungszweige bestimmt wird, ob der erste Schaltvorgang von hoher zu niedriger Ausgangsspannung oder von niedriger zu hoher Ausgangsspannung erfolgt, kann für den ungünstigeren der beiden Fälle eine Anpassung der Phasenversätze der jeweiligen Referenzsignalsysteme der verschiedenen Energieversorgungszweige erfolgen. Falls der erste Schaltvorgang von hoher zu niedriger Ausgangsspannung erfolgt, so kann das Referenzsignalsystem des entsprechenden Energieversorgungszweigs unverändert belassen werden. Falls der erste Schaltvorgang jedoch von niedriger zu hoher Ausgangsspannung erfolgen würde, so kann das Referenzsignalsystem der Referenzsignale x_{R} des entsprechenden Energieversorgungszweigs gegenüber den unverändert belassenen Referenzsignalsystemen der anderen Energieversorgungszweige um einen Zeitversatz von T/4k verschoben werden. Mit anderen Worten werden die Referenzsignale x_{R} des entsprechenden Energieversorgungszweigs um T/4k in negative oder positive Richtung auf der Zeitachse verschoben. Dadurch wird ein Zeitintervall der Dauer T/4k entweder übersprungen oder ein Mal wiederholt.

Mit dieser Vorgehensweise kann erreicht werden, dass der erste Schaltvorgang in allen Energieversorgungszweigen einheitlich von hoher zu niedriger Ausgangsspannung erfolgt, so dass nur noch die dem Sollwertspannungsraumzeiger u_{S} am nächsten liegenden Spannungsraumzeiger genutzt werden. Dies bedeutet, dass die Spannungs- bzw. Stromschwankungen in den Ausgangsspannungen der einzelnen Energieversorgungszweige auf ein Minimum werden können.

Es ist selbstverständlich auch möglich, dass das Referenzsignalsystem der Referenzsignale x_{R} des entsprechenden Energieversorgungszweigs gegenüber den unverändert belassenen Referenzsignalsystemen der anderen Energieversorgungszweige um T/4k verschoben werden kann, falls der erste Schaltvorgang von hoher zu niedriger Ausgangsspannung erfolgen würde. In diesem Fall erfolgt dann der erste Schaltvorgang in allen Energieversorgungszweigen einheitlich von niedriger zu hoher Ausgangsspannung. Die Richtung der zeitlichen Verschiebung um T/4k entlang der Zeitachse kann ebenfalls unterschiedlich gewählt werden, wodurch sich lediglich andere Schaltvorgänge zum Zeitpunkt der Verschiebung des Referenzsignalsystems ergeben, die Nutzung der dem Sollwertspannungsraumzeiger u_{S} am nächsten liegenden Spannungsraumzeiger aber beibehalten wird. Allgemein gesprochen ist für die Verschiebung des Referenzsignalsystems jeder Phasenversatz von T/4k + i * T/2k möglich, wobei i ein ganzzahliger Wert ist.

Fig. 13 zeigt eine schematische Darstellung eines Verfahrens 10 zum Ansteuern einer Energiespeichereinrichtung, beispielsweise der Energiespeichereinrichtung 1 in Fig. 1. Das Verfahren 10 kann dabei beispielsweise durch die Steuereinrichtung 9 in Fig. 1 implementiert werden. Das Verfahren 10 kann als ersten optionalen Schritt 11 für jeden der Energieversorgungszweige ein Bestimmen aufweisen, ob sich das pulsbreitenmodulierte Ansteuersignal des Energieversorgungszweigs zu Beginn einer Teilpulsperiode auf einem logisch hohen oder einem logisch niedrigen Potential befindet. In Abhängigkeit von dem bestimmten Sachverhalt kann dann in einem Schritt 12 ein Auswählen derjenigen Energieversorgungszweige erfolgen, für die sich das jeweilige pulsbreitenmodulierte Ansteuersignal des Energieversorgungszweigs zu Beginn einer Teilpulsperiode auf einem logisch niedrigen Potential befindet. Diese Energieversorgungszweige können dabei als zweite Energieversorgungszweige bezeichnet werden, die nicht ausgewählten Energieversorgungszweige als erste Energieversorgungszweige.

In einem Schritt 13 erfolgt für eine Anzahl k an Energiespeichermodulen mindestens eines ersten Energieversorgungszweigs, ein Erzeugen eines ersten pulsbreitenmodulierten Ansteuersignals zum Ansteuern der Koppeleinrichtungen der jeweiligen Energiespeichermodule durch Vergleichen eines ersten Sollwertsignals mit einer Anzahl von 2k ersten, eine Pulsperiode T aufweisenden periodischen Referenzsignalen, welche jeweils einen Phasenversatz von T/2k gegenüber benachbarten ersten Referenzsignalen aufweisen. Gleichzeitig erfolgt in einem Schritt 13 für eine Anzahl k an Energiespeichermodulen mindestens eines zweiten Energieversorgungszweigs, ein Erzeugen eines zweiten pulsbreitenmodulierten Ansteuersignals zum Ansteuern der Koppeleinrichtungen der jeweiligen Energiespeichermodule durch Vergleichen eines zweiten Sollwertsignals mit einer Anzahl von 2k zweiten, die Pulsperiode T aufweisenden periodischen Referenzsignalen, welche jeweils einen Phasenversatz von T/2k gegenüber benachbarten zweiten Referenzsignalen aufweisen. Dabei weisen die zweiten Referenzsignale gegenüber den ersten Referenzsignalen jeweils einen Phasenversatz von T/4k auf.

Mit dieser Vorgehensweise kann sichergestellt werden, dass stets diejenigen Spannungsraumzeiger zur Darstellung eines Sollwertspannungsraumzeigers genutzt werden, die dem Sollwertspannungsraumzeiger am nächsten liegen. Dadurch können die Strom- und Spannungsschwankungen in einer Energiespeichereinrichtung wie in Fig. 1 dargstellt auf ein Minimum reduziert werden.

Wie bereits beschrieben ist es besonders vorteilhaft, die Auswahl, ob das Referenzsignalsystem eines Energieversorgungszweiges auf der Zeitachse verschoben werden soll oder nicht sowie eine daraus sich gegebenenfalls ergebende Verschiebung dieses Referenzsignalsystems um T/4k auf der Zeitachse jeweils zu Beginn jeder Teil-Pulsperiode auszuführen. Ferner ist es vorteilhaft, die Sollwertsignale x_{S} der Energieversorgungszweige jeweils innerhalb einer Teilpulsperiode der Dauer T/2k konstant zu halten.

Das Verfahren kann in einfacher Weise auch auf Batterie-Umrichteranordnungen angepasst werden, bei denen die Koppeleinrichtungen 7 nicht als Vollbrücken, sondern nur als Halbbrücken ausgeführt sind. In diesem Fall entfallen gegenüber der Darstellung in Fig. 2 die Koppelelemente 7b und 7d und die Ausgangsklemme 3b wird statt mit dem nun entfallenen Mittelabgriff des rechten Zweigs der Vollbrücke nun entweder mit dem Minus- oder mit dem Pluspol der Energiespeicherzellenmoduls 5 verbunden. Da nun natürlich auch die Schaltvorgänge für den rechten Zweig der Vollbrücke entfallen, werden nun alle k Referenzsignale -x_{R}. Die verbleibenden k Referenzsignale x_{R} sind dann nicht mehr um T/2k sondern nur noch um T/k gegenüber den jeweils benachbarten Referenzsignalen versetzt. Die Dauer einer Teilpulsperiode verdoppelt sich in diesem Fall auf T/k. Entsprechend erfolgt die Verschiebung zwischen einem ersten System von Referenzsignalen und einem zweiten System von Referenzsignalen dann um T/2k.

## Patentansprüche

1. Verfahren (10) zum Ansteuern einer Energiespeichereinrichtung (1), welche aufweist:
n Ausgangsanschlüsse (1a, 1b, 1c), wobei n ≥ 2, zum Ausgeben einer Versorgungsspannung an jedem der Ausgangsanschlüsse (1a, 1b, 1c); und
n Energieversorgungszweige, welche jeweils mit einem der Ausgangsanschlüsse (1a, 1b, 1c) gekoppelt sind, wobei jeder der Energieversorgungszweige eine Vielzahl von in Serie geschalteten Energiespeichermodulen (3) aufweist, welche jeweils umfassen:
ein Energiespeicherzellenmodul (5), welches mindestens eine Energiespeicherzelle (5a, 5k) aufweist, und
eine Koppeleinrichtung (7) mit Koppelelementen (7a, 7b, 7c, 7d) in Vollbrückenschaltung, welche dazu ausgelegt sind, das Energiespeicherzellenmodul (5) selektiv in den jeweiligen Energieversorgungszweig zu schalten oder zu überbrücken,
wobei das Verfahren (10) die Schritte aufweist:
für eine Anzahl k an Energiespeichermodulen (3) mindestens eines ersten Energieversorgungszweigs, Erzeugen (13) eines ersten pulsbreitenmodulierten Ansteuersignals zum Ansteuern der Koppeleinrichtungen (7) der jeweiligen Energiespeichermodule (3) durch Vergleichen eines ersten Sollwertsignals (x_{SU}) mit einer Anzahl von 2k ersten, eine Pulsperiode T aufweisenden periodischen Referenzsignalen (x_{R}), welche jeweils einen Phasenversatz von T/2k gegenüber benachbarten ersten Referenzsignalen (x_{R}) aufweisen; und
für eine Anzahl k an Energiespeichermodulen (3) mindestens eines zweiten Energieversorgungszweigs, Erzeugen (14) eines zweiten pulsbreitenmodulierten Ansteuersignals zum Ansteuern der Koppeleinrichtungen (7) der jeweiligen Energiespeichermodule (3) durch Vergleichen eines zweiten Sollwertsignals (x_{SV}; x_{SW}) mit einer Anzahl von 2k zweiten, die Pulsperiode T aufweisenden periodischen Referenzsignalen (x_{R}), welche jeweils einen Phasenversatz von T/2k gegenüber benachbarten zweiten Referenzsignalen (x_{R}) aufweisen,
**gekennzeichnet durch**:
Bestimmen für jeden der Energieversorgungszweige, ob sich das pulsbreitenmodulierte Ansteuersignal des Energieversorgungszweigs zu Beginn einer Teilpulsperiode der Dauer T/2k auf einem logisch hohen oder einem logisch niedrigen Potential befindet und, auf Basis des Bestimmens, Verschieben eines Referenzsignalsystems von zweiten Referenzsignalen (x_{R}) eines Energieversorgungszweigs gegenüber einem Referenzsignalsystem von ersten Referenzsignalen (x_{R}) eines unverändert belassenen Energieversorgungszweigs um einen Phasenversatz von T/4k, so dass der erste Schaltvorgang in den Energieversorgungszweigen einheitlich von hoher zu niedriger Ausgangsspannung oder einheitlich von niedriger zu hoher Ausgangsspannung erfolgt.

2. Verfahren (10) nach Anspruch 1, weiterhin mit dem Schritt:
Auswählen (12) derjenigen Energieversorgungszweige, für die sich das jeweilige pulsbreitenmodulierte Ansteuersignal des Energieversorgungszweigs zu Beginn einer Teilpulsperiode (T/2k) auf einem logisch niedrigen Potential befindet, als zweite Energieversorgungszweige.

3. Verfahren (10) nach Anspruch 1, weiterhin mit dem Schritt:
Auswählen (12) derjenigen Energieversorgungszweige, für die sich das jeweilige pulsbreitenmodulierte Ansteuersignal des Energieversorgungszweigs zu Beginn einer Teilpulsperiode (T/2k) auf einem logisch hohen Potential befindet, als zweite Energieversorgungszweige.

4. Verfahren (10) nach einem der Ansprüche 1 bis 3, wobei der Phasenversatz der zweiten Referenzsignale gegenüber den ersten Referenzsignalen positiv ist.

5. Verfahren (10) nach einem der Ansprüche 1 bis 3, wobei der Phasenversatz der zweiten Referenzsignale gegenüber den ersten Referenzsignalen negativ ist.

6. Verfahren (10) nach einem der Ansprüche 1 bis 5, wobei ein Wechsel von dem Referenzsignalsystem von ersten Referenzsignalen zu einem Referenzsignalsystem von zweiten Referenzsignalen und umgekehrt immer durch Verschieben des bisher verwendeten Referenzsignalsystems von Referenzsignalen um eine halbe Teilpulsperiode auf der Zeitachse in negative Richtung oder immer durch Verschieben des bisher verwendeten Referenzsignalsystems von Referenzsignalen um eine halbe Teilpulsperiode (T/4k) auf der Zeitachse in positive Richtung erfolgt.

7. Verfahren (10) nach einem der Ansprüche 1 bis 6, wobei die ersten und zweiten Referenzsignale (x_{R}) Dreiecksignale sind.

8. Verfahren (10) nach einem der Ansprüche 1 bis 7, wobei die ersten und zweiten Sollwertsignale (x_{SU}; x_{SV}; x_{SW}) zumindest über eine Teilpulsperiode (T/2k) hinweg konstanten Signalpegel aufweisen.

9. Verfahren (10) nach einem der Ansprüche 1 bis 8, wobei sich jeweils ergebende Arten und Zeitpunkte der Schaltvorgänge direkt ohne permanente Berechnung der Referenzsignale x_{R} und -x_{R} berechnet werden.

10. System (100), mit:
einer Energiespeichereinrichtung (1), welche aufweist:
n Ausgangsanschlüsse (1a, 1b, 1c), wobei n ≥ 2, zum Ausgeben einer Versorgungsspannung an jedem der Ausgangsanschlüsse (1a, 1b, 1c); und
n Energieversorgungszweige, welche jeweils mit einem der Ausgangsanschlüsse (1a, 1b, 1c) gekoppelt sind, wobei jeder der Energieversorgungszweige eine Vielzahl von in Serie geschalteten Energiespeichermodulen (3) aufweist, welche jeweils umfassen:
ein Energiespeicherzellenmodul (5), welches mindestens eine Energiespeicherzelle (5a, 5k) aufweist, und
eine Koppeleinrichtung (7) mit Koppelelementen (7a, 7b, 7c, 7d) in Vollbrückenschaltung, welche dazu ausgelegt sind, das Energiespeicherzellenmodul (5) selektiv in den jeweiligen Energieversorgungszweig zu schalten oder zu überbrücken; **gekennzeichnet durch**:
einer Steuereinrichtung (9), welche mit den Koppeleinrichtungen (7) gekoppelt ist, und welche dazu ausgelegt ist, ein Verfahren (10) zum Ansteuern der Energiespeichereinrichtung (1) nach einem der Ansprüche 1 bis 9 durchzuführen.

11. System (100) nach Anspruch 10, wobei die Koppeleinrichtungen (7) Leistungs-MOSFET-Schalter oder IGBT-Schalter aufweisen.

## Claims

1. Method (10) for controlling an energy storage device (1) that comprises:
n output connectors (1a, 1b, 1c), wherein n ≥ 2, for the purpose of providing a supply voltage at each of the output connectors (1a, 1b, 1c), and n energy supply branches that are coupled in each case to one of the output connectors (1a, 1b, 1c), wherein each of the energy supply branches comprises several series-connected energy storage modules (3) that in each case comprise:
an energy storage cell module (5) that comprises at least one energy storage cell (5a, 5k), and
a coupling device (7) having coupling elements (7a, 7b, 7c, 7d) in a full bridge circuit, which coupling elements are designed so as to selectively connect the energy storage cell module (5) into the respective energy supply branch or bridge said energy storage cell module,
wherein the method (10) comprises the steps:
of generating (13) a first pulse width modulated control signal for a number k of energy storage modules (3) at least of one first energy supply branch for the purpose of controlling the coupling devices (7) of the respective energy storage modules (3) by means of comparing a first desired value signal (x_{SU}) with a number of 2k first periodic reference signals (x_{R}) that comprise a pulse period T, which periodic reference signals that in each case comprise a phase shift of T/2k with respect to adjacent first reference signals (x_{R}); and
of generating (14) a second pulse width modulated control signal for a number k of energy storage modules (3) one at least of second energy supply branch for the purpose of controlling the coupling devices (7) of the respective energy storage modules (3) by means of comparing a second desired value signal (x_{SV}; x_{SW}) with a number of 2k second periodic reference signals (x_{R}) that comprise the pulse period T, which periodic reference signals in each case comprise a phase shift of T/2k with respect to adjacent second reference signals (x_{R}),
**characterized by** determining for each of the energy supply branches whether the pulse width modulated control signal of the energy supply branch is at a logic "high" potential or a logic "low" potential at the beginning of a partial pulse period of the duration T/2k and based on said determining, displacing a reference signal system of second reference signals (x_{R}) of an energy supply branch by a phase shift of T/4k with respect to a reference signal system of first reference signals (x_{R}) of an energy supply branch which remains unchanged, such that the first switching process in the energy supply branches occurs in a uniform manner from the high output voltage to the low output voltage or in a uniform manner from the low output voltage to the high output voltage.

2. Method (10) according to Claim 1, furthermore with the step:
of selecting (12) as second energy supply branches those energy supply branches for which the respective pulse width modulated control signal of the energy supply branch is at a logic "low" potential at the beginning of a partial pulse period (T/2k).

3. Method (10) according to Claim 1, furthermore with the step:
of selecting (12) as second energy supply branches the energy supply branches for which the respective pulse width modulated control signal of the energy supply branch is at a logic "high" potential at the beginning of a partial pulse period (T/2k).

4. Method (10) according to any one of Claims 1 to 3, wherein the phase shift of the second reference signals is positive with respect to the first reference signals.

5. Method (10) according to any one of Claims 1 to 3, wherein the phase shift of the second reference signals is negative with respect to the first reference signals.

6. Method (10) according to any one of Claims 1 to 5, wherein a change from the reference signal system of first reference signals to the reference signal system of second reference signals and conversely, takes place always by means of displacing the previously used reference signal system of reference signals by half a partial pulse period on the time axis in the negative direction or always by means of displacing the previously used reference signal system of reference signals by a half partial pulse period (T/4k) on the time axis in the positive direction.

7. Method (10) according to any one of Claims 1 to 6, wherein the first and second reference signals (x_{R}) are triangular signals.

8. Method (10) according to any one of Claims 1 to 7, wherein the first and second desired value signals (x_{SU}; x_{SV}; x_{SW}) comprise a constant signal level at least over one partial pulse period (T/2k).

9. Method (10) according to any one of Claims 1 to 8, wherein respectively resulting types and points in time of the switching processes are calculated directly without the need to permanently calculate the reference signals x_{R} and -_{XR}.

10. System (100), having:
an energy storage device (1) that comprises:
n output connectors (1a, 1b, 1c), wherein n ≥ 2, for the purpose of providing a supply voltage at each of the output connectors (1a, 1b, 1c); and
n energy supply branches that are coupled in each case to one of the output connectors (1a, 1b, 1c), wherein each of the energy supply branches comprises several series-connected energy storage modules (3) that in each case comprise:
an energy storage cell module (5) that comprises at least one energy storage cell (5a, 5k), and
a coupling device (7) having coupling elements (7a, 7b, 7c, 7d) in a full bridge circuit, which coupling elements are designed so as to selectively connect the energy storage cell module (5) into the respective energy supply branch or bridge said energy storage cell module; **characterized by**:
a control device (9) that is coupled to the coupling devices (7) and that is designed so as to implement a method (10) for controlling the energy storage device (1) according to any one of Claims 1 to 9.

11. System (100) according to Claim 10, wherein the coupling devices (7) comprise power MOSFET switches or IGBT switches.

## Revendications

1. Procédé (10) pour commander un dispositif d'accumulation d'énergie (1), qui possède :
n bornes de sortie (1a, 1b, 1c), avec n ≥ 2, destinées à délivrer une tension d'alimentation au niveau de chacune des bornes de sortie (1a, 1b, 1c) ; et
n branches d'alimentation en énergie, lesquelles sont respectivement connectées à l'une des bornes de sortie (1a, 1b, 1c), chacune des branches d'alimentation en énergie possédant une pluralité de modules d'accumulation d'énergie (3) branchés en série, qui comprennent respectivement :
un module de cellule d'accumulation d'énergie (5) qui possède au moins une cellule d'accumulation d'énergie (5a, 5k), et
un dispositif de connexion (7) comprenant des éléments de connexion (7a, 7b, 7c, 7d) dans un branchement en pont complet, lesquels sont conçus pour commuter sélectivement le module de cellule d'accumulation d'énergie (5) dans la branche d'alimentation en énergie respective ou le court-circuiter,
le procédé (10) comprenant les étapes suivantes :
pour un nombre k de modules d'accumulation d'énergie (3) d'au moins une première branche d'alimentation en énergie, génération (13) d'un premier signal de commande modulé en largeur d'impulsions en vue de commander les dispositifs de connexion (7) des modules d'accumulation d'énergie (3) respectifs par comparaison d'un premier signal de consigne (x_{SU}) avec un nombre de 2k premiers signaux de référence (x_{R}) périodiques présentant une période d'impulsion T, lesquels présentent respectivement un déphasage T/2k par rapport aux premiers signaux de référence (x_{R}) voisins ; et
pour un nombre k de modules d'accumulation d'énergie (3) d'au moins une deuxième branche d'alimentation en énergie, génération (14) d'un deuxième signal de commande modulé en largeur d'impulsions en vue de commander les dispositifs de connexion (7) des modules d'accumulation d'énergie (3) respectifs par comparaison d'un deuxième signal de consigne (x_{SV} ; x_{SW}) avec un nombre de 2k deuxièmes signaux de référence (x_{R}) périodiques présentant la période d'impulsion T, lesquels présentent respectivement un déphasage T/2k par rapport aux deuxièmes signaux de référence (x_{R}) voisins,
**caractérisé par** :
pour chacune des branches d'alimentation en énergie, la détermination si le signal de commande modulé en largeur d'impulsions de la branche d'alimentation en énergie au début d'une période d'impulsion partielle de durée T/2k se trouve à un potentiel logiquement haut ou logiquement bas et, sur la base de la détermination, le décalage d'un système de signal de référence de deuxièmes signaux de référence (x_{R}) d'une branche d'alimentation en énergie par rapport à un système de signal de référence de premiers signaux de référence (x_{R}) d'une branche d'alimentation en énergie laissée inchangée d'un déphasage T/4k, de sorte que la première opération de commutation dans les branches d'alimentation en énergie s'effectue uniformément de la tension de sortie haute vers la basse ou uniformément de la tension de sortie basse vers la haute.

2. Procédé (10) selon la revendication 1, comprenant en outre l'étape suivante :
sélection (12), en tant que deuxième branche d'alimentation en énergie, de la branche d'alimentation en énergie pour laquelle le signal de commande modulé en largeur d'impulsions respectif de la branche d'alimentation en énergie au début d'une période d'impulsion partielle (T/2k) se trouve à un potentiel logiquement bas.

3. Procédé (10) selon la revendication 1, comprenant en outre l'étape suivante :
sélection (12), en tant que deuxième branche d'alimentation en énergie, de la branche d'alimentation en énergie pour laquelle le signal de commande modulé en largeur d'impulsions respectif de la branche d'alimentation en énergie au début d'une période d'impulsion partielle (T/2k) se trouve à un potentiel logiquement haut.

4. Procédé (10) selon l'une des revendications 1 à 3, le déphasage des deuxièmes signaux de référence par rapport aux premiers signaux de référence étant positif.

5. Procédé (10) selon l'une des revendications 1 à 3, le déphasage des deuxièmes signaux de référence par rapport aux premiers signaux de référence étant négatif.

6. Procédé (10) selon l'une des revendications 1 à 5, un passage du système de signal de référence des premiers signaux de référence à un système de signal de référence des deuxièmes signaux de référence et inversement s'effectuant toujours en décalant le système de signal de référence de signaux de référence utilisé jusqu'à présent d'une demi période d'impulsion partielle sur l'axe du temps dans la direction négative ou toujours en décalant le système de signal de référence de signaux de référence utilisé jusqu'à présent d'une demi période d'impulsion partielle (T/4k) sur l'axe du temps dans la direction positive.

7. Procédé (10) selon l'une des revendications 1 à 6, les premiers et deuxièmes signaux de référence (x_{R}) étant des signaux triangulaires.

8. Procédé (10) selon l'une des revendications 1 à 7, les premier et deuxième signaux de consigne (X_{SU} ; X_{SV} ; X_{SW}) présentant des niveaux de signal constants au moins sur une période d'impulsion partielle (T/2k).

9. Procédé (10) selon l'une des revendications 1 à 8, les types et les instants des opérations de commutation qui résultent respectivement étant calculés directement sans calcul permanent des signaux de référence x_{R} et -X_{R}.

10. Système (100), comprenant :
un dispositif d'accumulation d'énergie (1), qui possède :
n bornes de sortie (1a, 1b, 1c), avec n ≥ 2, destinées à délivrer une tension d'alimentation au niveau de chacune des bornes de sortie (1a, 1b, 1c) ; et
n branches d'alimentation en énergie, lesquelles sont respectivement connectées à l'une des bornes de sortie (1a, 1b, 1c), chacune des branches d'alimentation en énergie possédant une pluralité de modules d'accumulation d'énergie (3) branchés en série, qui comprennent respectivement :
un module de cellule d'accumulation d'énergie (5) qui possède au moins une cellule d'accumulation d'énergie (5a, 5k), et
un dispositif de connexion (7) comprenant des éléments de connexion (7a, 7b, 7c, 7d) dans un branchement en pont complet, lesquels sont conçus pour commuter sélectivement le module de cellule d'accumulation d'énergie (5) dans la branche d'alimentation en énergie respective ou le court-circuiter ;
**caractérisé par** :
un dispositif de commande (9) qui est connecté aux dispositifs de connexion (7) et qui est conçu pour mettre en œuvre un procédé (10) pour commander le dispositif d'accumulation d'énergie (1) selon l'une des revendications 1 à 9.

11. Système (100) selon la revendication 10, les dispositifs de connexion (7) possédant des commutateurs MOSFET de puissance ou des commutateurs IGBT.
